# EUROPEAN PATENT APPLICATION

(11) **EP 4 306 923 A1**
(43) Date of publication of application: **17.01.2024**
(21) Application number: 23185148.6
(22) Date of filing: 13.07.2023
(51) Int. Cl.: G01K 1/08, G05D 23/19, H01H 9/04, H01H 37/04

(54) **WATERPROOF AND MOISTURE-PROOF THERMOSTAT**

(30) Priority: 13.07.2022 CN 202210854045
(71) Applicant: Therm-O-Disc, Incorporated, Mansfield, Ohio 44907 (US)
(72) Inventor: ZHAO, Changcai, Zhuhai, Guangdong, 519000 (CN); PAN, Zhaosheng, Zhuhai, Guangdong, 519000 (CN); XIAO, Guojun, Zhuhai, Guangdong, 519000 (CN); SUN, Wei, Zhuhai, Guangdong, 519000 (CN); LIN, Kangsheng, Zhuhai, Guangdong, 519000 (CN)
(74) Representative: Bryn-Jacobsen, Caelia

(57) **Abstract**

A waterproof and moisture-proof thermostat is provided. The waterproof and moisture-proof thermostat includes: a housing, in which an isolation chamber is defined; a temperature control module arranged in the isolation chamber; a gas flow passage extending from the isolation chamber to an exterior of the waterproof and moisture-proof thermostat; and a waterproof and moisture-proof breathable membrane, which is arranged across the gas flow passage and is configured to allow a gas to pass through the waterproof and moisture-proof breathable membrane and prevent a liquid from passing through the waterproof and moisture-proof breathable membrane. The present application not only ensures the excellent waterproof and moisture-proof performance of the thermostat, but also balances the pressure inside and outside the housing of the thermostat, which can effectively prevent component failure and safety hazards caused by high pressure in the housing of the thermostat, and improve the performance of the thermostat.

## Description

### FIELD

The present application relates to electronic devices, and in particular to a waterproof and moisture-proof thermostat.

### BACKGROUND

The contents of this section only provide background information related to this disclosure, which may not constitute the prior art.

A thermostat is widely used in various household appliances and industrial production to sense temperature changes and automatically control circuit on-off or adjust temperature according to the temperature changes. Some thermostats may need to be used in humid environments, splashing water environments or even submerged environments, which requires the thermostats to meet the corresponding waterproof level. Generally, in the conventional waterproof and moisture-proof thermostat, a material such as epoxy resin is used to seal a housing of the thermostat, so as to prevent water or water vapor from entering the housing and damaging the electronic devices in the housing. Since the housing of this type of thermostat is completely sealed, a pressure in the housing cannot be released and the heat is difficult to dissipate when an operating temperature of the thermostat rises and the pressure inside the housing rises accordingly. The high temperature and high pressure environment in the housing can easily lead to the deterioration or damage of the temperature sensitive elements and electronic devices in the housing, shorten the service life of the thermostat, and even lead to safety accidents such as burning of the electronic devices and explosion of the housing. Therefore, in order to meet safety requirements, the conventional waterproof and moisture-proof thermostat generally has strict restrictions on the operating current and the operating temperature of the thermostat, so that it is difficult to use such thermostats under high load conditions and high operating temperatures.

### SUMMARY

An object according to the present application is to improve a waterproof and moisture-proof sealing structure of a thermostat, which can realize the pressure balance inside and outside a housing of the thermostat while ensuring the waterproof and moisture-proof performance of the thermostat.

Another object according to the present application is to improve an operating current and an operating temperature of a waterproof and moisture-proof thermostat.

A waterproof and moisture-proof thermostat is provided according to one aspect of the present application. The waterproof and moisture-proof thermostat includes: a housing, in which an isolation chamber is defined; a temperature control module arranged in the isolation chamber; a gas flow passage extending from the isolation chamber to an exterior of the waterproof and moisture-proof thermostat; and a waterproof and moisture-proof breathable membrane, which is arranged across the gas flow passage and is configured to allow a gas to pass through the waterproof and moisture-proof breathable membrane and prevent a liquid from passing through the waterproof and moisture-proof breathable membrane.

In an embodiment, the waterproof and moisture-proof thermostat may further include a tubular member which defines the gas flow passage.

In an embodiment, the waterproof and moisture-proof breathable membrane may be arranged at an end, away from the isolation chamber, of the tubular member.

In an embodiment, the waterproof and moisture-proof breathable membrane may be fixed to the end of the tubular member by an adhesive and a pressing ring, and the waterproof and moisture-proof breathable membrane is sandwiched between the end of the tubular member and the pressing ring.

In an embodiment, the waterproof and moisture-proof thermostat may further include a sealing layer which is arranged in the housing and defines the isolation chamber in the housing, and the sealing layer is configured to prevent a gas or a liquid from passing through the sealing layer into the isolation chamber.

In an embodiment, the sealing layer may include epoxy resin.

In an embodiment, the tubular member may extend through the sealing layer.

In an embodiment, the pressing ring may be surrounded by the sealing layer and a connection between the end of the tubular member and the pressing ring is sealed by the sealing layer.

In an embodiment, the waterproof and moisture-proof thermostat may further include a spacer, which separates at least a part of the temperature control module from the sealing layer.

In an embodiment, the spacer may be provided with a protrusion, a through hole extending through the spacer may be formed in the protrusion, and a recess for accommodating the protrusion may be defined at an end, close to the isolation chamber, of the tubular member.

In an embodiment, multiple layers of spaced waterproof and moisture-proof breathable membranes may be arranged along the gas flow passage.

In an embodiment, the waterproof and moisture-proof thermostat may further include multiple end-to-end tubular members, the gas flow passage is defined by the multiple end-to-end tubular members, and one layer of waterproof and moisture-proof breathable membrane may be provided between any two adjacent tubular members.

In an embodiment, the waterproof and moisture-proof breathable membrane may include a polytetrafluoroethylene membrane.

In an embodiment, the waterproof and moisture-proof thermostat may include multiple gas flow passages.

The thermostat according to the present application is provided with the gas flow passage with the waterproof and moisture-proof breathable membrane, which effectively balances the pressure inside and outside the housing of the thermostat, so as to avoid the damage of the circuit or other components inside the housing due to high pressure failure, improve the heat dissipation of the thermostat, improve the service life and safety of the thermostat, and improve the operating current and the operating temperature of the thermostat.

In another aspect, the thermostat according to the present application maintains excellent waterproof and moisture-proof performance, which can effectively prevent water or other liquids from entering the interior of the thermostat, and can further effectively prevent water vapor from entering the interior of the thermostat and generating condensed water in the interior of the thermostat.

### BRIEF DESCRIPTION OF THE DRAWINGS

The embodiments of the present disclosure will be described below with reference to the drawings by way of example. In the drawings, same features or components are indicated by same reference numerals, and the drawings may not be drawn to scale. In the drawings:
FIG. 1 shows a perspective cross-sectional view of a waterproof and moisture-proof thermostat according to an embodiment of the present application;
FIG. 2 shows a perspective cross-sectional view of the semi-finished thermostat before a sealing layer is formed according to the embodiment shown in FIG. 1; and
FIG. 3 shows a perspective cross-sectional view of the semi-finished thermostat before the sealing layer is formed according to another embodiment of the present application.

### DETAILED DESCRIPTION OF THE EMBODIMENTS

The following description is essentially only illustrative rather than intending to limit the present invention and the application or usage thereof. It should be appreciated that, throughout all drawings, similar reference signs indicate the same or similar parts or features. Each drawing only illustratively shows the concept and principle of the embodiments of the present application, and does not necessarily show the specific dimensions and scales of various embodiments of the present application. Specific parts in specific drawings may be exaggerated to illustrate related details or structures of various embodiments of the present application.

In the description of the embodiments of the present application, the orientation terms related to "upper", "lower", "left", and "right" used herein are described according to the upper and lower position relationships of the views shown in the accompanying drawings. In practical applications, the positional relationships of "upper" and "lower" used herein may be defined according to actual conditions. These relationships may be reversed.

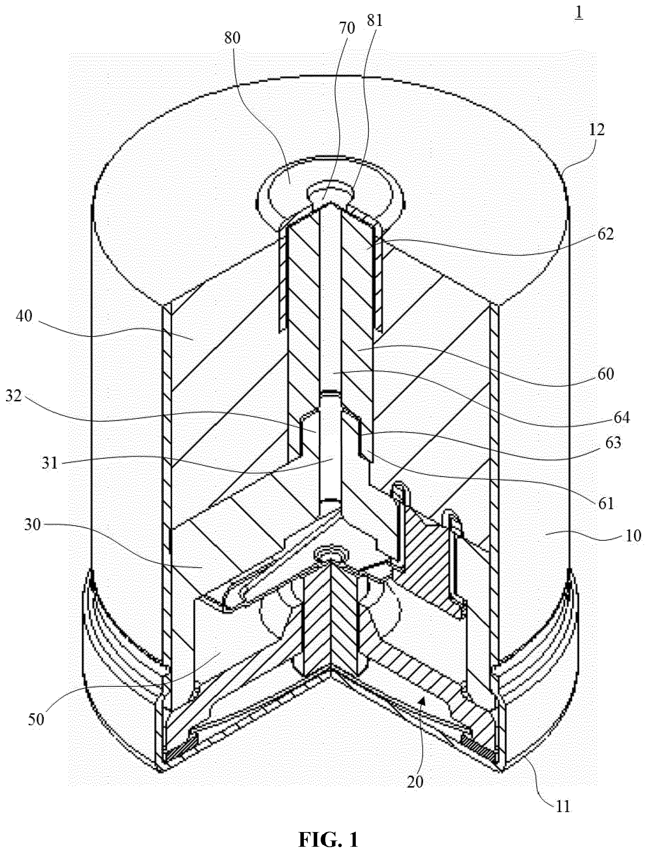

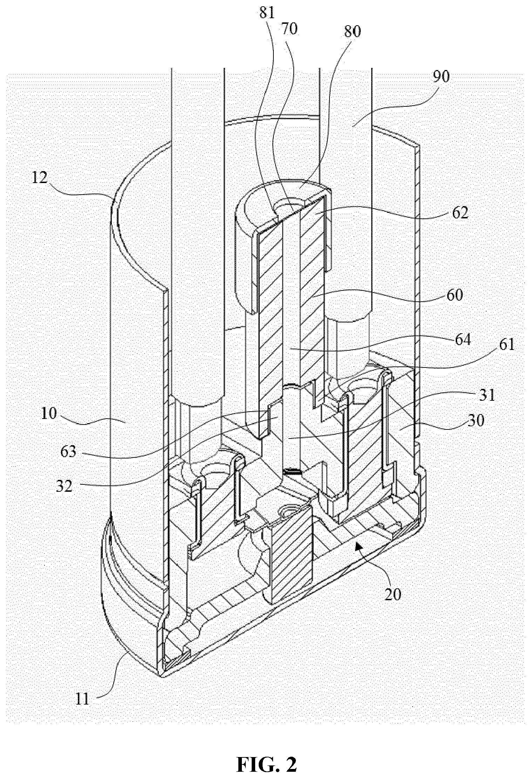

Referring first to FIG. 1 and FIG. 2, a waterproof and moisture-proof thermostat 1 according to an embodiment of the present application will be described. FIG. 1 shows a perspective cross-sectional view of the waterproof and moisture-proof thermostat 1, and FIG. 2 shows a perspective cross-sectional view of the semi-finished thermostat before a sealing layer is formed according to the embodiment shown in FIG. 1.

As shown in FIG. 1 and FIG. 2, the waterproof and moisture-proof thermostat 1 includes a housing 10 and a temperature control module 20 which is arranged in the housing 10. The temperature control module 20 may include various types of temperature sensitive elements and/or control circuits. It can be seen more clearly from FIG. 2 that in this embodiment, the housing 10 is in a shape of a hollow cylinder with a closed first end 11 and an open second end 12 which is opposite to the first end 11. The temperature control module 20 is arranged at the closed first end 11 in the housing 10. The waterproof and moisture-proof thermostat 1 may further include a spacer 30 which is arranged in the housing 10 and separates the housing 10 into two spaces, at least a part of the temperature control module 20 may be arranged on one side of the spacer 30, and a sealing layer 40 may be arranged on another opposite side of the spacer 30. The spacer 30 can separate the at least a part (such as an electronic device) of the temperature control module 20 from the sealing layer 40, so as to protect the temperature control module 20 and ensure that the temperature control module 20 has a sufficient operating space. As shown in FIG. 1, the sealing layer 40 is arranged between the second end 12 of the housing 10 and the spacer 30 and fills the space between the spacer 30 and the housing 10. The sealing layer 40 may include epoxy resin or any other suitable sealing material to form an air tight seal. Therefore, an isolation chamber 50 for accommodating the temperature control module 20 in the housing 10 is defined by the sealing layer 40, and the sealing layer 40 can prevent a gas or a liquid from passing through the sealing layer 40 into the isolation chamber 50. In this embodiment, the isolation chamber 50 is defined between the sealing layer 40 and the closed first end 11 of the housing 10. In other embodiments, the isolation chamber may be defined at other suitable position in the housing. In addition, it should be understood that the spacer 30 may not be provided in other embodiments, or the spacer 30 may be integrally formed with a part of the temperature control module 20.

As shown in FIG. 1 and FIG. 2, a through hole 31 which extends through the spacer 30 to the isolation chamber 50 is defined in the spacer 30. The waterproof and moisture-proof thermostat 1 may further include a tubular member 60. The tubular member 60 extends through the sealing layer 40 and has a first end 61 and a second end 62 which are opposite, the first end 61 is connected to the spacer 30, and the second end 62 extends away from the isolation chamber 50 to be flush with the second end 12 of the housing 10 or slightly beyond the second end 12 of the housing 10. The first end 61 of the tubular member 60 and the spacer 30 may be connected by shape matching. In this embodiment, the spacer 30 includes a protrusion 32 which protrudes from one side of the spacer 30, the through hole 31 is defined in the protrusion 32, and a recess 63 for accommodating the protrusion 32 is defined at the first end 61 of the tubular member 60. The tubular member 60 further includes a central passage 64 which extends from the first end 61 to the second end 62 along a length of the tubular member 60, and the central passage 64 and the through hole 31 of the spacer 30 are aligned and together define a gas flow passage which extends from the isolation chamber 50 to an exterior of the waterproof and moisture-proof thermostat 1. In other embodiments, the gas flow passage which extends from the isolation chamber to the exterior of the waterproof and moisture-proof thermostat may be defined in any other suitable method.

A waterproof and moisture-proof breathable membrane 70 across the gas flow passage is arranged at the second end 62 of the tubular member 60. The waterproof and moisture-proof breathable membrane 70 may be fixed to the second end 62 of the tubular member 60 by an adhesive. As shown in FIG. 2, the waterproof and moisture-proof thermostat 1 may further include a pressing ring 80 for fixing the waterproof and moisture-proof breathable membrane 70. The pressing ring 80 is cylindrical and surrounds the second end 62 of the tubular member 60, so as to sandwich the waterproof and moisture-proof breathable membrane 70 between the pressing ring 80 and the second end 62 of the tubular member 60. An opening 81 which is aligned with the central passage 64 of the tubular member 60 is defined in the pressing ring 80, so that the waterproof and moisture-proof breathable membrane 70 is exposed to the exterior of the waterproof and moisture-proof thermostat 1 and the gas flow passage is in communication with the exterior of the waterproof and moisture-proof thermostat 1 through the waterproof and moisture-proof breathable membrane 70.

The waterproof and moisture-proof breathable membrane 70 is a porous thin membrane provided with many tiny breathable holes. Gas molecules can penetrate from one side of the waterproof and moisture-proof breathable membrane 70 to another side through the breathable holes, but the liquid or droplets suspended in the gas cannot penetrate the waterproof and moisture-proof breathable membrane 70 due to the condensation of the surface tension of the liquid. Therefore, the waterproof and moisture-proof breathable membrane 70 can allow the gas to pass through and prevent the liquid from passing through, and the waterproof and moisture-proof breathable membrane 70 can prevent the water vapor from passing through. In this embodiment, the waterproof and moisture-proof breathable membrane 70 includes a polytetrafluoroethylene membrane. However, in other embodiments, the waterproof and moisture-proof breathable membrane 70 may also include any other suitable material. For example, the waterproof and moisture-proof breathable membranes with the commodity brands of ES681, ES682 produced by Dongguan Wells Technology Co., Ltd. can be used. In this embodiment, hole diameters of the breathable holes in the waterproof and moisture-proof breathable membrane 70 preferably range from 5nm to 500nm, and more preferably, range from 20nm to 200nm. In this embodiment, a thickness of the waterproof and moisture-proof breathable membrane 70 preferably ranges from 10µm to 500µm, and more preferably, ranges from 100µm to 300µm.

FIG. 2 shows the semi-finished thermostat before the sealing layer 40 is formed. In this embodiment, the temperature control module 20, the spacer 30, the tubular member 60, the waterproof and moisture-proof breathable membrane 70 and the pressing ring 80 can be arranged in the housing 10 as described above, and then the liquid epoxy resin is filled into the housing 10 and cured to form the sealing layer 40. The cured sealing layer 40 can surround the spacer 30, the tubular member 60 and the pressing ring 80, and further fix and seal connections between these members. As shown in FIG. 2, a connection terminal 90 of the waterproof and moisture-proof thermostat 1 can be sealed in the sealing layer 40. It should be understood that in other embodiments, the sealing layer 40 can be omitted or any other suitable sealing structure may be used to replace the sealing layer 40.

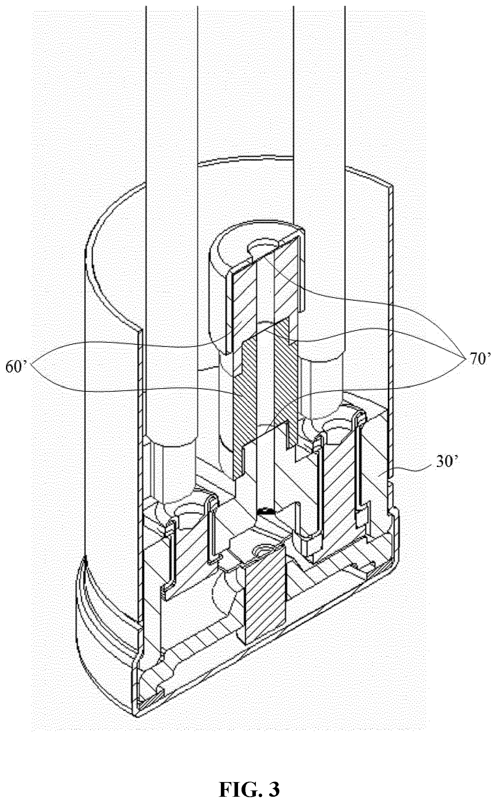

FIG. 3 shows a perspective cross-sectional view of the semi-finished thermostat before the sealing layer is formed according to another embodiment of the present application. In FIG. 3, the same or corresponding components as those shown in FIGS. 1 and 2 are represented by the same reference numerals with apostrophes. The difference between this embodiment and the embodiment shown in FIG. 1 and FIG. 2 is that in this embodiment, multiple layers of spaced waterproof and moisture-proof breathable membranes 70' are arranged along the gas flow passage. In order to fix the multiple layers of waterproof and moisture-proof breathable membranes 70', multiple end-to-end tubular members 60' can be provided to replace the single tubular member 60 in the above embodiment, and one layer of waterproof and moisture-proof breathable membrane 70' can be provided between any two adjacent tubular members 60'. In addition, one layer of waterproof and moisture-proof breathable membrane 70' can be provided between a tubular member 60' and the spacer 30'. Similar to the embodiment shown in FIG. 1 and FIG. 2, the connection between two adjacent tubular members 60' and the connection between the tubular member 60' and the spacer 30' can be achieved by shape matching, and then can be further fixed and sealed by the cured epoxy resin sealing layer. Other aspects in this embodiment are substantially the same with that in the embodiment shown in FIG. 1 and FIG. 2, which will not be described herein.

In other embodiments of the present application, the waterproof and moisture-proof breathable membrane can be arranged in other suitable method. For example, an end cover with an opening can be arranged at the second end 12 of the housing 10 shown in FIG. 1, so that the opening of the end cover is aligned with the gas flow passage, and the waterproof and moisture-proof breathable membrane can be arranged on the opening of the end cover. In addition, in other embodiments of the present application, multiple gas flow passages can be provided.

The waterproof and moisture-proof sealing structure in the thermostat is improved according to the present application. By arranging the gas flow passage with the waterproof and moisture-proof breathable membrane in the thermostat, the isolation chamber for accommodating the temperature control module can be in communication with the exterior of the thermostat on the premise of ensuring the waterproof and moisture-proof performance of the thermostat, which can balance the pressure inside and outside the housing of the thermostat, prevent the temperature sensitive elements, electronic devices or other components inside the thermostat from being damaged due to high pressure failure. In addition, the gas flow passage with the waterproof and moisture-proof breathable membrane is beneficial to improving the heat dissipation effect of the thermostat. Therefore, the durability and service life of the thermostat are significantly improved. In another aspect, since the gas flow passage with the waterproof and moisture-proof breathable membrane substantially eliminates the potential safety hazards caused by high temperature and high pressure in the housing, the waterproof and moisture-proof thermostat according to the application can withstand greater operating current and higher operating temperature than the conventional waterproof and moisture-proof thermostat.

The waterproof and moisture-proof thermostat according to the present application can reach the waterproof level of IPX7, and can prevent water from entering the interior of the thermostat under the condition of immersion in water at a depth of 20cm. In addition, since the waterproof and moisture-proof breathable membrane has excellent performance of preventing water vapor permeability, the waterproof and moisture-proof thermostat according to the present application can further effectively prevent water vapor from entering the housing of the thermostat and generating condensed water in the housing.

The exemplary embodiments of the waterproof and moisture-proof thermostat according to the present application have been described in detail, but it should be understood that the present disclosure is not limited to the specific embodiments described and shown in detail above. Without departing from the spirit and scope of the present application, those skilled in the art can make various modifications and variations to the present application. All the variations and modifications are within the scope of the present disclosure. Moreover, all the components described herein can be replaced by other technically equivalent components.

## Claims

1. A waterproof and moisture-proof thermostat, comprising:
a housing, in which an isolation chamber is defined;
a temperature control module arranged in the isolation chamber;
a gas flow passage extending from the isolation chamber to an exterior of the waterproof and moisture-proof thermostat; and
a waterproof and moisture-proof breathable membrane, which is arranged across the gas flow passage and is configured to allow a gas to pass through the waterproof and moisture-proof breathable membrane and prevent a liquid from passing through the waterproof and moisture-proof breathable membrane.

2. The waterproof and moisture-proof thermostat according to claim 1, wherein the waterproof and moisture-proof thermostat further comprises a tubular member which defines the gas flow passage.

3. The waterproof and moisture-proof thermostat according to claim 2, wherein the waterproof and moisture-proof breathable membrane is arranged at an end, away from the isolation chamber, of the tubular member.

4. The waterproof and moisture-proof thermostat according to claim 3, wherein the waterproof and moisture-proof breathable membrane is fixed to the end of the tubular member by an adhesive and a pressing ring, and the waterproof and moisture-proof breathable membrane is sandwiched between the end of the tubular member and the pressing ring.

5. The waterproof and moisture-proof thermostat according to claim 4, wherein the waterproof and moisture-proof thermostat further comprises a sealing layer which is arranged in the housing and defines the isolation chamber in the housing, and the sealing layer is configured to prevent a gas or a liquid from passing through the sealing layer into the isolation chamber.

6. The waterproof and moisture-proof thermostat according to claim 5, wherein the sealing layer includes epoxy resin.

7. The waterproof and moisture-proof thermostat according to claim 5, wherein the tubular member extends through the sealing layer.

8. The waterproof and moisture-proof thermostat according to claim 7, wherein the pressing ring is surrounded by the sealing layer and a connection between the end of the tubular member and the pressing ring is sealed by the sealing layer.

9. The waterproof and moisture-proof thermostat according to claim 5, wherein the waterproof and moisture-proof thermostat further comprises a spacer, which separates at least a part of the temperature control module from the sealing layer.

10. The waterproof and moisture-proof thermostat according to claim 9, wherein the spacer is provided with a protrusion, a through hole extending through the spacer is formed in the protrusion, and a recess for accommodating the protrusion is defined at an end, close to the isolation chamber, of the tubular member.

11. The waterproof and moisture-proof thermostat according to claim 1, wherein a plurality of layers of spaced waterproof and moisture-proof breathable membranes are arranged along the gas flow passage.

12. The waterproof and moisture-proof thermostat according to claim 11, wherein the waterproof and moisture-proof thermostat further comprises a plurality of end-to-end tubular members, the gas flow passage is defined by the plurality of end-to-end tubular members, and one layer of waterproof and moisture-proof breathable membrane is provided between any two adjacent tubular members.

13. The waterproof and moisture-proof thermostat according to any one of claims 1 to 12, wherein the waterproof and moisture-proof breathable membrane comprises a polytetrafluoroethylene membrane.

14. The waterproof and moisture-proof thermostat according to any one of claims 1 to 12, wherein the waterproof and moisture-proof thermostat comprises a plurality of gas flow passages.
